# EUROPÄISCHE PATENTSCHRIFT

(11) **EP 3 411 754 B1**
(45) Veröffentlichungstag und Bekanntmachung des Hinweises auf die Patenterteilung: **05.04.2023**
(21) Anmeldenummer: 17707175.0
(22) Anmeldetag: 01.02.2017
(51) Int. Cl.: G02F 1/39, H01S 3/067, H01S 3/11

(54) **VERFAHREN ZUR ERZEUGUNG VON LASERPULSEN**
METHOD FOR GENERATING LASER PULSES
PROCÉDÉ DE GÉNÉRATION D'IMPULSIONS LASER

(30) Priorität: 01.02.2016 DE 102016101752; 23.02.2016 DE 102016103093
(43) Veröffentlichungstag der Anmeldung: 12.12.2018
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: GOTTSCHALL, Thomas, 07745 Jena (DE); LIMPERT, Jens, 07751 Jena (DE); TÜNNERMANN, Andreas, 99425 Weimar (DE)
(74) Vertreter: Schneiders & Behrendt Bochum
(86) Internationale Anmeldenummer: PCT/EP2017/052105
(87) Internationale Veröffentlichungsnummer: WO 2017/134078

(56) Entgegenhaltungen:
- WO-A1-2015/063063
- GOTTSCHALL T ET AL: "Four-wave mixing based light sources for real-world biomedical applications of coherent Raman microscopy", PROGRESS IN BIOMEDICAL OPTICS AND IMAGING - PROCEEDINGS OF SPIE - MULTIPHOTON MICROSCOPY IN THE BIOMEDICAL SCIENCES XVI, SAN FRANCISCO, USA, 14-16 FEBRUARY 2016, Bd. 9712, 14. März 2016 (2016-03-14), Seiten 9712021-9712025, XP60064780, DOI: 10.1117/12.2212213
- THOMAS GOTTSCHALL ET AL: "Fiber-based optical parametric oscillator for high resolution coherent anti-Stokes Raman scattering (CARS) microscopy", OPTICS EXPRESS, Bd. 22, Nr. 18, 3. September 2014 (2014-09-03), Seite 21921, XP055370557, DOI: 10.1364/OE.22.021921
- JAY E. SHARPING ET AL: "Optical parametric oscillator based on four-wave mixing in microstructure fiber", OPTICS LETTERS, Bd. 27, Nr. 19, 1. Oktober 2002 (2002-10-01), Seite 1675, XP055370721, ISSN: 0146-9592, DOI: 10.1364/OL.27.001675
- ERIN S LAMB ET AL: "Fiber optical parametric oscillator for coherent anti-Stokes Raman scattering microscopy", OPTICS LETTERS, OPTICAL SOCIETY OF AMERICA, Bd. 38, Nr. 20, 15. Oktober 2013 (2013-10-15), Seiten 4154-4157, XP001584924, ISSN: 0146-9592, DOI: 10.1364/OL.38.004154 [gefunden am 2013-10-10]
- CHEN JIN ET AL: "Wide-band and fast wavelength-swept optical parametric oscillator with a photonic crystal fiber based on dispersion tuning technology at 1 μm", PROGRESS IN BIOMEDICAL OPTICS AND IMAGING, SPIE - INTERNATIONAL SOCIETY FOR OPTICAL ENGINEERING, BELLINGHAM, WA, US, Bd. 9720, 7. März 2016 (2016-03-07), Seiten 97201D1-97201D5, XP060068651, ISSN: 1605-7422, DOI: 10.1117/12.2214195 ISBN: 978-1-5106-0027-0
- LEI ZHANG ET AL: "An all-fiber continuously time-dispersion-tuned picosecond optical parametric oscillator at 1 [mu]m region", OPTICS EXPRESS, Bd. 21, Nr. 21, 15. Oktober 2013 (2013-10-15), Seite 25167, XP055371455, DOI: 10.1364/OE.21.025167
- GOU DOU-DOU ET AL: "Fiber optical parametric oscillator based on photonic crystal fiber pumped with all-normal-dispersion mode-locked Yb:fiber laser", CHINESE PHYSICS B, CHINESE PHYSICS B, BRISTOL GB, Bd. 23, Nr. 11, 13. November 2014 (2014-11-13), Seite 114204, XP020272737, ISSN: 1674-1056, DOI: 10.1088/1674-1056/23/11/114204 [gefunden am 2014-11-13]
- THOMAS GOTTSCHALL ET AL: "Fiber-based source for multiplex-CARS microscopy based on degenerate four-wave mixing", OPTICS EXPRESS, Bd. 20, Nr. 11, 21. Mai 2012 (2012-05-21), Seiten 12004-12013, XP055370683, DOI: 10.1364/OE.20.012004
- GOTTSCHALL T ET AL: "Four-wave mixing based light sources for real-world biomedical applications of coherent Raman microscopy", PROGRESS IN BIOMEDICAL OPTICS AND IMAGING - PROCEEDINGS OF SPIE - MULTIPHOTON MICROSCOPY IN THE BIOMEDICAL SCIENCES XVI 2016 SPIE USA, vol. 9712, 2016, DOI: 10.1117/12.2212213

## Beschreibung

Die Erfindung betrifft ein Verfahren zur Erzeugung Laserpulsen unter Verwendung eines Pumplasers, der Laserpulse bei einer Pumpwellenlänge mit einer Repetitionsfrequenz emittiert, und eines optisch parametrischen Oszillators, der die Laserpulse des Pumplasers zumindest zum Teil in Laserpulse bei einer Signalwellenlänge und einer davon verschiedenen Idlerwellenlänge umwandelt.

Für die kohärente Raman-Spektroskopie/Mikroskopie (CRS) werden zwei synchronisierte Laserpulszüge mit Repetitionsraten von wenigen MHz bis wenigen zehn MHz benötigt. Dabei muss der Energieabstand zwischen den Zentralwellenlängen der beiden Laserpulszüge den Raman-Resonanzenergien der zu untersuchenden Moleküle entsprechen. Um mehrere Resonanzenergien und damit verschiedene Molekülsorten adressieren zu können, muss der Energieabstand zwischen den beiden Laserpulszügen variabel sein. Außerdem müssen die Laserpulse eine Spitzenleistung von mehr als 100 W besitzen, damit die resultierenden Messsignale rauscharm sind. Da gleichzeitig die mittlere Leistung (z.B. bei Einsatz an lebendem Gewebe) den mW-Bereich nicht überschreiten sollte, müssen sehr kurze Laserpulse (Pulsdauer zwischen 5 ps und 50 ps) verwendet werden, um die benötigte Pulsspitzenleistung bereit zu stellen. Außerdem muss für CRS die spektrale Bandbreite der Laserpulse weniger als 10 cm⁻¹ (d.h. weniger als 1 nm bei 1000 nm Zentralwellenlänge) betragen. Da sich die spektrale Bandbreite eines transformlimitierten Laserpulses invers proportional zur Pulsdauer verhält, darf die Pulsdauer einen bestimmten Mindestwert nicht unterschreiten. Die Zentralwellenlängen der Laserpulse werden meist im nahen Infrarotbereich gewählt, da in diesem Bereich die Absorption (in biologischem Material) gering ist und die beugungsbegrenzte räumliche Auflösung hoch. Entsprechend sollten die Laserpulse eine minimale Pulsdauer von ca. 1 ps nicht unterschreiten, um bei transformlimitierter Bandbreite den Anforderungen an die spektrale Auflösung zu genügen. Daher ist die Verwendung von Laserpulsen im Bereich von 0,5-100 ps ein Kompromiss aus einer hohen spektralen Auflösung der Ramanresonanzen und der Erzeugung rauscharmer Messsignale durch die Anregung mit hoher Pulsspitzenleistung bei einer verträglichen mittleren Leistung.

Eine Vorrichtung der eingangs genannten Art, nämlich ein auf optischen Fasern basierender optisch parametrischer Oszillator (OPO) ist aus dem Stand der Technik bekannt. Der OPO wandelt, abhängig von der Wellenlänge und der Repetitionsfrequenz des Pumplasers, einen Teil des Lichts in Laserpulse bei einer kleineren Wellenlänge (Signalwellenlänge) und einen anderen Teil in Laserpulse bei einer größeren Wellenlänge (Idlerwellenlänge) um. Die so erzeugten Laserpulse können für (bildgebende) CRS Verfahren verwendet werden. In der WO 2015/063063 A1 umfasst der OPO einen Resonator, der einen nichtlinearen Wellenlängenkonverter zur Erzeugung von Strahlung bei der Signal- und Idlerwellenlänge, ein dispersives Element mit einer wellenlängenabhängigen Verzögerungscharakteristik und ein Auskoppelelement zur zumindest teilweisen Auskopplung der Strahlung aus dem Resonator auf. Da während der parametrischen Umwandlung die Pumpenergie nicht gespeichert wird, muss der OPO synchron gepumpt werden. Deshalb muss der zeitliche Abstand der Pumppulse, d.h. der Laserpulse des Pumplasers, der Umlaufzeit der Signal- oder Idlerstrahlung im Resonator des OPOs entsprechen. Wird die Resonatorlänge für die Signal- oder Idlerwellenlänge so gewählt, dass sie resonant zur Repetitionsfrequenz des Pumplasers ist und gleichzeitig der Vierwellenmischprozess in dem entsprechenden Wellenlängenbereich die Umlaufverluste überkompensiert, werden die Laserpulse bei der Signal- und Idlerwellenlänge erzeugt. Wird die Resonatorlänge des OPOs verändert, ist ein anderer Wellenlängenbereich resonant zu den Pumppulsen. Können in diesem Wellenlängenbereich die Umlaufverluste im Resonator durch die Verstärkung im OPO weiterhin überkompensiert werden, schwingen entsprechend neue Signalund Idlerwellenlängen an. Aus der WO 2015/063063 A1 ist zudem bekannt, dass alternativ oder zusätzlich zur Resonatorlänge des OPOs auch die Repetitionsrate der Pumpstrahlungsquelle variiert werden kann. Das dispersive Element (z.B. eine optische Faser mit einer Dispersion im Bereich von 10-100 ps/nm und einer Länge von 10-1000 m) bewirkt eine zeitliche Verzögerung der im Resonator rückgekoppelten Pulse im Bereich von 95-100% des reziproken Wertes der Repetitionsrate der Pumppulse oder eines Vielfachen davon. Gleichzeitig kann das dispersive Element eine zeitliche Verlängerung der Pulse im Bereich von 1 -500 ps je nm spektraler Bandbreite bewirken. Durch das dispersive Element kann beispielsweise die spektrale Bandbreite der Strahlung stark verringert werden. Nur im zeitlichen Überlappungsbereich des Pumppulses mit den im Zeitbereich spektral hintereinander gestaffelten Frequenzkomponenten der rückgekoppelten Strahlung erfolgt eine Verstärkung. Im eingeschwungenen Zustand ist die erzeugte Strahlung derart schmalbandig, dass eine möglicherweise entstehende dispersive Pulsverlängerung kaum einen Einfluss hat

Es ist Aufgabe der Erfindung, ein Verfahren bereit zu stellen, das die effiziente Erzeugung von synchronen Laserpulszügen bei zwei verschiedenen Zentralwellenlängen ermöglicht, wobei der verfügbare Durchstimmbereich hinsichtlich des Abstands der Zentralwellenlängen gegenüber dem Stand der Technik vergrößert sein soll.

Diese Aufgabe löst die Erfindung ausgehend von einer Vorrichtung bzw. einem Verfahren der eingangs angegebenen Art dadurch, dass die Signalwellenlänge und die Idlerwellenlänge bei einer festen Länge des optischen Resonators variiert werden durch Variation der Pumpwellenlänge und der Repetitionsfrequenz. Dabei weist der Pumplaser einen Laserresonator, einen sättigbaren Absorber, ein in dem Laserresonator angeordnetes optisch gepumptes Lasermedium, eine variable Verzögerungsstrecke zur Einstellung der Repetitionsfrequenz und einen Auskoppler auf, wobei in dem Laserresonator außerdem ein wellenlängenselektives Filter angeordnet ist, das eine Filterbandbreite von 50-1000 pm aufweist und in dem Wellenlängenbereich, in dem das Lasermedium die in dem Laserresonator umlaufende Strahlung verstärkt, durchstimmbar ist, wobei der Pumplaser ein Faserlaser ist, und wobei der Auskoppler fasergekoppelt ist und mit einer grundmodigen und polarisationserhaltenden Eingangsfaser und einer ebensolchen Ausgangsfaser verbunden ist und im Bereich des Verstärkungsspektrums des Lasermediums eine Reflektivität von 5-95% besitzt, wobei die Eingangsfaser und die Ausgangsfaser an einen polarisationserhaltenden, fasergekoppelten Strahlteiler angebunden sind, der zwei Eingangs- und zwei Ausgangsanschlüsse besitzt, wobei die zwei Ausgangsanschlüsse über eine Faserschleife miteinander verbunden sind.

Für jede Pumpwellenlänge gibt es aufgrund der Energieerhaltungs- und Phasenanpassungsbedingung innerhalb der jeweiligen Wellenlängenbereiche der Signal- und Idlerstrahlung nur ein Wellenlängentripel, das die maximale Umwandlungseffizienz bei einer bestimmten Repetitionsfrequenz des Pumplasers ermöglicht. An den Grenzen dieser Wellenlängenbereiche fällt die Umwandlungseffizienz merklich ab. Die Erfindung schlägt vor, einen Pumplaser zu verwenden, der hinsichtlich der Pumpwellenlänge und der Repetitionsfrequenz kontinuierlich durchstimmbar ist. Somit können über breite Wellenlängenbereiche die Signal- und Idlerstrahlung mit hoher Effizienz erzeugt werden. Die Pumpwellenlänge sollte vorzugsweise im Bereich zwischen 1015 und 1060, möglichst zumindest zwischen 1025 und 1050 nm durchstimmbar sein. Alle für die kohärente Raman-Spektroskopie relevanten Energieabstände können damit erfindungsgemäß abgedeckt werden.

Der Pumplaser weist eine variable (d.h. einstellbare) Repetitionsfrequenz auf, so dass mit einer festen Resonatorlänge des OPOs bei verschiedenen Pumpwellenlängen gearbeitet werden kann. Vorteilhaft emittiert der Pumplaser die Laserpulse mit einer Repetitionsfrequenz zwischen 1 MHz und 20 MHz, wobei eine relative Durchstimmbarkeit der Repetitionsfrequenz bis zu 5 % ausreicht. Durch die im optischen Resonator erfindungsgemäß vorgesehene stark dispersive optische Faser weist der Resonator eine deutliche Wellenlängenabhängigkeit der effektiven Resonatorlänge auf. Die optische Faser sorgt für eine signifikant wellenlängenabhängige Verzögerungscharakteristik, wodurch die Laserpulse optisch gestreckt werden. Daraus resultiert der Vorteil, dass ein Andern der Wiederholrate der Pumpstrahlungspulse eine Änderung der Wellenlängen der erzeugten Strahlung bewirkt. Insbesondere wird durch die signifikante Dispersion im Rückkopplungszweig des Resonators die erzeugte Strahlung wesentlich schmalbandiger als in konventionellen OPOs.

Das Verfahren gemäß der Erfindung erzeugt spektrale Bandbreiten der Wellenlänge der Strahlung, die nahezu dem Transformlimit der Pulsdauer der erzeugten Strahlung entsprechen. Diese Eigenschaften basieren auf der Tatsache, dass eine effiziente Konversion von Pump- in Strahlungsleistung nur erfolgen kann, wenn die im Resonator zurückgekoppelten, zeitlich gestreckten Pulse einen guten zeitlichen Überlapp mit Pumppulsen der Pumpstrahlungsquelle aufweisen.

Durch die stark dispersive optische Faser im Resonator ist der zeitliche Überlapp der Pumpstrahlung und der Signalstrahlung nur für bestimmte Wellenlängenbereiche erfüllt. Diese Wellenlängenbereiche können über die Verzögerungsscharakteristik bzw. Dispersionscharakeristik des dispersiven Elements vorgegeben werden.

Bevorzugt wird die Konvertierung der Wellenlänge in dem optisch parametrischen Oszillator durch eine sogenannte Vier-Wellenmischung ("Four-Wave-Mixing" - FWM) durchgeführt. Ähnlich der klassischen optisch parametrischen Frequenzerzeugung in nichtlinearen Kristallen kann in mikrostrukturierten Fasern Licht konvertiert werden. Bei der klassischen optisch parametrischen Frequenzerzeugung handelt es sich um einen Dreiwellenmischprozess der durch Kristall-Nichtlinearitäten ermöglicht wird. Da diese in Glasfasern nicht vorhanden sind, treten hier zuerst Nichtlinearitäten auf, die in der Form von Vier-Wellenmischung Strahlung konvertieren können. So kann unter Beachtung der Phasenanpassungsbedingung die Signalstrahlung, die beispielsweise für nichtlineare Raman-Spektroskopie notwendig ist, in Fasern erzeugt werden.

In einer vorteilhaften Ausführungsform der Erfindung ist die dispersive optische Faser eine Einmodenfaser, oder auch Monomodefaser oder Singlemodefaser genannt. Dabei wird eine bestimmte Wellenlänge verzögert übertragen. Dadurch ergibt sich in einfacher Weise eine wellenlängenabhängige effektive Resonatorlänge.

Um die Wellenlänge gemäß der Erfindung einzustellen, stehen somit weitere Möglichkeiten zur Verfügung. So kann neben der Repetitionsrate der Pumpstrahlung auch die Pumppulsdauer der Pumpstrahlung oder die Pumppulsform der Pumpstrahlung verändert werden. Diese Veränderungen können wechselweise oder gleichzeitig erfolgen.

Kern der Erfindung ist, anders ausgedrückt, die Kombination der Durchstimmbarkeit des Pumplasers hinsichtlich Pumpwellenlänge und Repetitionsfrequenz mit der Integration der stark dispersiven optischen Faser in den Resonator des optisch parametrischen Verstärkers, die für eine zeitliche Streckung der Signal- bzw. Idler-Pulse in der Weise sorgt, dass durch die Synchronisierung mit den Pumppulsen bestimmte schmale Wellenlängenbereiche aus der dispersiv gestreckten Signal- bzw. Idler-Strahlung selektiert werden können. Damit besteht insgesamt die Möglichkeit, schmalbandige Laserpulse zu erzeugen, deren Wellenlänge über einen breiten Bereich abgestimmt werden kann. Die Schmalbandigkeit ergibt sich dabei aus der zeitlichen Streckung in der dispersiven optischen Faser im Verhältnis zur Dauer der Pumppulse. Damit steht eine ideale Laserpulsquelle für die kohärente Raman-Spektroskopie oder -Mikroskopie zur Verfügung.

Der erfindungsgemäß durchstimmbare Pumplaser wird dadurch bereitgestellt, dass in den Laserresonator eines herkömmlichen Pulslasers (mit einem Laserresonator, einem sättigbaren Absorber, einem in dem Laserresonator angeordneten optisch gepumptem Lasermedium und einem Auskoppler) ein durchstimmbares wellenlängenselektives Filter eingebracht wird, durch das eine bestimmte Wellenlänge vorgegeben wird. Dabei beträgt die Filterbandbreite des wellenlängenselektiven Filters 50-1000 pm. Der Durchstimmbereich ist zweckmäßig an den Wellenlängenbereich, in dem das Lasermedium die in dem Laserresonator umlaufende Strahlung verstärkt, angepasst. Durch die Verluste für alle anderen Wellenlängen im Emissionsbereich des Lasermediums wird eine starke Unterdrückung herbeigeführt, so dass nur der verlustarme spektrale Durchlassbereich des Filters eine Oszillation zulässt. Die Auskoppelverluste des Laserresonators sowie die Oszillationsverluste sollten über den spektralen Durchstimmbereich des Pumplasers möglichst homogen sein, damit eine nahezu konstante Ausgangsleistung bereitsteht. Daher sollte eine dotierte optische Faser als Lasermedium in Kombination mit fasergekoppelten Komponenten verwendet werden, die keine oder nur eine geringe spektrale Variation der Transmission zeigen. Der Pumplaser ist daher ein Faserlaser. Als durchstimmbares wellenlängenselektives Filter des Pumplasers eignet sich z.B. ein verstellbares Etalon oder ein Faser-Bragg-Gitter, dessen Gitterkonstante und damit Durchlasswellenlänge durch thermische oder mechanische Dehnung variabel ist. Bevorzugt wird ein auf einem optischen Liniengitter basierendes fasergekoppeltes Filter verwendet.

Bei einer bevorzugten Ausgestaltung der erfindungsgemäßen Vorrichtung ist dem Pumplaser ein optischer Verstärker nachgeordnet, der die Laserpulse verstärkt, bevor diese in dem optisch parametrischen Oszillator umgewandelt werden. Durch den Verstärker wird die zur effizienten Wellenlängenumwandlung erforderliche Leistung der Pumppulse erzeugt. Zur Einstellung der Leistung kann der optische Verstärker einen Amplitudenmodulator an sich üblicher Bauart aufweisen. Dem optischen Verstärker kann ein optischer Isolator nachgeordnet sein, um Störungen durch Rückreflexe zu vermeiden.

Bei Bedarf kann vor oder nach dem Verstärker ein Pulspicker an sich üblicher Bauart vorgesehen sein, um die Repetitionsfrequenz der Laserpulse zu erniedrigen.

Weitere Merkmale, Einzelheiten und Vorteile der Erfindung ergeben sich aus dem Wortlaut der Ansprüche sowie aus der Beschreibung von Ausführungsbeispielen anhand der Abbildungen.

Die Erfindung wird in weiteren Einzelheiten anhand des nachfolgenden Textes mit Bezug auf bevorzugte Ausführungsbeispiele anhand der Abbildungen näher erläutert.

Es zeigen:
- Fig. 1: eine Vorrichtung als Blockdiagramm;
- Fig. 2: den Pumplaser der Vorrichtung als Blockdiagramm;
- Fig. 3: das Emissionsspektrums des Pumplasers gemäß Fig. 2;
- Fig. 4: Diagramm der Signal- und Idlerwellenlängen der erfindungsgemäß erzeugten Laserpulse für verschiedene Pumpwellenlängen und Repetitionsfrequenzen;
- Fig. 5: schematische Darstellungen von Auskopplern des Pumplasers in zwei Varianten;
- Fig. 6: optisch parametrischer Oszillator der Vorrichtung.

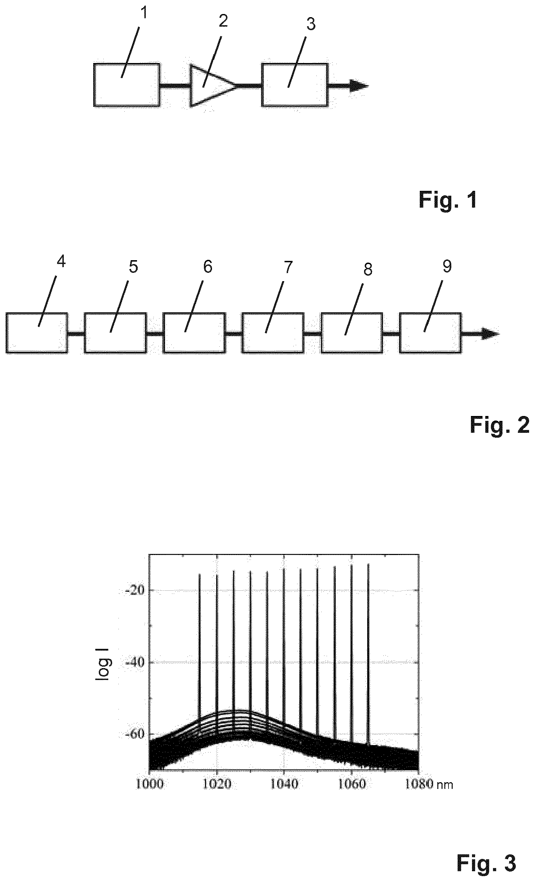

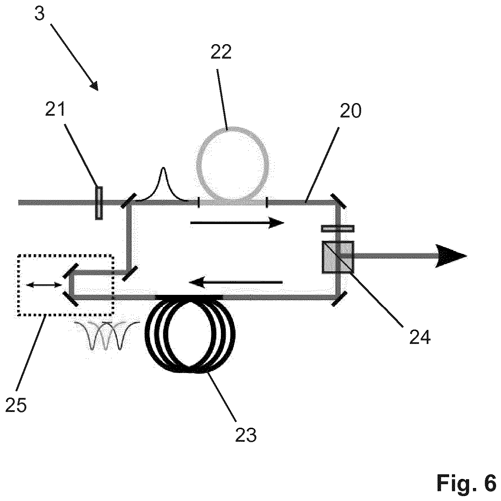

Fig. 1 zeigt schematisch eine Vorrichtung. Diese umfasst einen Pumplaser 1, der Laserpulse bei einer Pumpwellenlänge emittiert, wobei die Pulsdauer der Laserpulse 0,5-100 ps beträgt. Die Pulsrepetitionsfrequenz liegt im Bereich von 100 kHz bis 100 MHz und ist variabel einstellbar. Die Pumpwellenlänge, d.h. die Zentralwellenlänge der Laserpulse des Pumplasers 1 ist zwischen 1025 nm und 1050 nm durchstimmbar. Dem Pumplaser 1 ist ein optischer Verstärker 2 nachgeordnet, der in dem genannten Wellenlängenbereich verstärkt. Die Laserpulse des Pumplasers 1 werden in dem optischen Verstärker 2 verstärkt, bevor sie in einen optisch parametrischen Oszillator (OPO) 3 eingekoppelt und dort durch einen nichtlinearen Vierwellenprozess zumindest zum Teil in Laserpulse bei einer Signalwellenlänge und einer davon verschiedenen Idlerwellenlänge umgewandelt werden. Die mittlere Leistung am Ausgang des optischen Verstärkers 2 liegt im Bereich von 100 mW bis 10 W. Der OPO 3 ist z.B. wie in Fig. 6 dargestellt ausgebildet.

Fig.2 zeigt schematisch den Aufbau des Pumplasers 1, der als Faserlaser aufgebaut ist. Dieser umfasst einen sättigbaren Absorberspiegel 4, eine variable Verzögerungstrecke 5 zur Einstellung der Repetitionsfrequenz, ein durchstimmbares wellenlängenselektives Filter 6 zur Durchstimmung der Pumpwellenlänge, einen Wellenlängenmultiplexer (WDM) mit fasergekoppelter Pumpdiode, die eine aktive Faser als Lasermedium 7 pumpt, einen fasergekoppelten Polarisator 8 und einen teilreflektiven Auskoppelspiegel 9 mit weitgehend wellenlängenunabhängiger Charakteristik. Dem modengekoppelten Faserlaser wird durch das sehr schmalbandige durchstimmbare fasergekoppelte Filter 6 eine bestimmte Wellenlänge vorgegeben. Das bedeutet, dass durch die Verluste für alle anderen Wellenlängen im Emissionsbereich des Lasermediums 7 eine starke Unterdrückung im Resonator herbeigeführt wird. Nur der verlustarme Wellenlängenbereich, der durch das Filter 6 selektiert wird, lässt eine Oszillation zu. Es werden ausschließlich fasergekoppelte Komponenten in dem Pumplaser 1 verwendet, die keine oder nur eine geringe spektrale Variation der Transmission zeigen. Zur Faseranbindung des sättigbaren Absorbers 4 kann eine (variable) Teleskopoptik verwendet werden. Die Freistrahlstrecke kann dabei weniger als 1 % der gesamten Resonatorlänge ausmachen. Die Fasern der einzelnen Komponenten sind grundsätzlich polarisationserhaltend und werden grundmodig benutzt. Es ist nicht zwingend notwendig, einen fasergekoppelten Polarisator 8 zu verwenden, wenn das durchstimmbare Filter 6 von sich aus eine starke Polarisationsabhängigkeit zeigt. Anderenfalls ist der Polarisator 8 notwendig, um den Betrieb in nur einem Polarisationszustand zu ermöglichen und so einen zeitlich stabilen Betrieb sicher zu stellen. Nach dem Auskoppler 9 wird am Ausgang ein Isolator (nicht dargestellt) verwendet, um nicht den Betrieb des Pumplasers 1 durch Rückreflexe zu stören.

Fig. 3 zeigt das Ausgangsspektrum (logarithmische spektrale Intensität als Funktion der Wellenlänge zwischen 1000 nm und 1080 nm) für verschiedene Filtereinstellungen des Filters 6 bei einem praktisch realisierten Ausführungsbeispiel. Die Filterbandbreite des verwendeten Filters beträgt 120 pm bei -3dB. Es ist möglich, den Pumplaser 1 mit einer größeren Filterbandbreite zu betreiben und dadurch eine geringere Pulsdauer der Laserpulse zu erreichen. Dadurch kann ohne eine aufwendige und breitbandige Dispersionkompensation im Laserresonator eine spektrale Bandbreite der Laserpulse von bis zu 400 pm und eine Pulsdauer unterhalb von 10 ps erzeugt werden. Durch die Filterbandbreite kann die Pulsdauer in weiten Bereichen vorgegeben werden. Bei dem Ausführungsbeispiel kann eine Pulsdauer im Bereich von 10 ps bei einer Filterbandbreite von 580 pm über den Wellenlängenbereich von 1015 nm bis 1065 nm erzeugt werden.

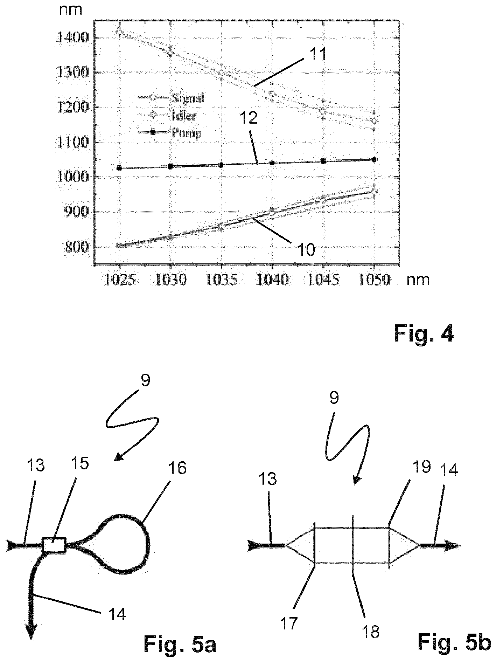

In Abhängigkeit von der Einstellung der Repetitionsfrequenz und der Zentralwellenlänge des Pumplasers 1 kann erfindungsgemäß über weite Wellenlängenbereiche ein effizienter Energietransfer im (ebenfalls faserbasierten) OPO 3 stattfinden. Fig. 4 zeigt die Wellenlängenbereiche, in denen Laserpulse bei der Signalwellenlänge 10 und der Idlerwellenlänge 11 bei verschiedenen Pumpwellenlängen 12 adressierbar sind. Bei dem Ausführungsbeispiel wurde die Repetitionsfrequenz im Bereich von 18,760 MHz bis 18,807 MHz variiert, um die Resonanz der Pumppulse zu den Signalpulsen mit den unterschiedlichen Signalwellenlängen im OPO 3 herzustellen. Dies entspricht einer Variation der Resonatorlänge des Pumplasers von nur 20 mm. Da für jede Pumpwellenlänge die optimale Repetitionsfrequenz gewählt werden kann, ist die Konversionseffizienz im Wellenlängenkonverter des OPO 3 stets optimal. Eine Konversionseffizienz von der Pumpstrahlung zur Signalstrahlung von über 20% über den gesamten adressierbaren Wellenlängenbereich ist möglich.

Die Fig. 5a zeigt eine erfindungsgemäße Realisierung eines fasergekoppelten Auskopplers 9 des Pumplasers 1. Der Auskoppler 9 ist mit einer grundmodigen und polarisationserhaltenden Eingangsfaser 13 und einer ebensolchen Ausgangsfaser 14 verbunden und besitzt im Bereich des Verstärkungsspektrums des Lasermediums eine Reflektivität von 5-95 %. Das in die Eingangsfaser 13 eingekoppelte Licht wird zurückgeleitet. Der transmittierte Teil wird zur Ausgangsfaser 14 gekoppelt. Die Fasern 13, 14 sind an einen polarisationserhaltenden fasergekoppelten Strahlteiler 15 angebunden, der jeweils zwei Eingangs- und Ausgangsanschlüsse besitzt. Die zwei Ausgangsanschlüsse sind über eine Faserschleife 16 miteinander verbunden. Das Koppelverhältnis des fasergekoppelten Strahlteilers 15 kann zwischen 1 und 49% liegen und stellt dadurch ein Auskoppelverhältnis zwischen 3 und 99% ein.

Die Fig. 5b zeigt eine nicht erfindungsgemäße Variante eines fasergekoppelten Auskopplers 9.

Diese umfasst eine Kollimationsoptik 17, einen teilreflektiven breitbandigen Planspiegel 18 und ein Fokussieroptik 19.

Als weitere (nicht dargestellte) nicht erfindungsgemäße Variante eignet sich als Auskoppler 9 ein freies Faserende, das breitbandig teilreflektiv beschichtet sein kann.

Fig. 6 zeigt schematisch den OPO 3. Der OPO 3 umfasst einen Resonator 20 mit einer wellenlängenabhängigen Resonatorlänge. Zwischen dem Resonator 20 und dem Verstärker 2 (Fig. 1) ist zusätzlich ein spektrales Filter 21 vorgesehen zum Filtern der in den Resonator einzukoppelnden Strahlung.

Der Resonator 20 weist einen nichtlinearen Wellenlängenkonverter 22 (z.B. mikrostrukturierte Faser mit Nulldispersionswellenlänge für transversale Fundamentalmode im Bereich von 1025-1350 nm) zur Erzeugung von Strahlung bei einer Signal- und Idler-Wellenlänge auf. In dem Resonator 20 ist weiter eine stark dispersive optische Faser 23 zur Erzeugung einer wellenlängenabhängigen Verzögerungscharakteristik vorgesehen, sowie ein Auskoppelelement 24 zur zumindest teilweisen Auskopplung der Strahlung aus dem Resonator 20. Optional kann der Resonator 20 eine variable Verzögerungsstrecke 25 aufweisen, welche ein Verändern der absoluten Resonatorlänge unabhängig von der Wellenlänge ermöglicht. Allerdings werden erfindungsgemäß die Signalwellenlänge und die Idlerwellenlänge bei einer festen Länge des optischen Resonators variiert durch Variation der Pumpwellenlänge und der Repetitionsfrequenz.

Durch Verändern der Repetitionsrate des Pumplasers 1 kann die Wellenlängencharakteristik der von dem OPO abgegebenen Strahlung variiert werden. Die optische Faser 23 weist eine Dispersion im Bereich von 10-100 ps/nm, vorzugsweise ca. 30 ps/nm, und eine Länge von 10-1000 m, vorzugsweise ca. 250 m auf. Sie bewirkt eine zeitliche Verzögerung, d.h. Streckung der im Resonator zurückgekoppelten Laserpulse im Bereich von 95-100% des reziproken Wertes der Repetitionsrate der Pumppulse oder eines Vielfachen davon. Dabei bewirkt die optischer Faser 23 eine zeitliche Verlängerung der Pulse im Bereich von 1-500 ps je nm spektraler Bandbreite. Durch die optische Faser 23 wird die spektrale Bandbreite der Laserpulse bei der Signal- und Idlerwellenlänge gegenüber den Pumppulsen stark verringert. Nur im zeitlichen Überlappungsbereich des jeweiligen Pumppulses mit den im Zeitbereich spektral hintereinander gestaffelten Frequenzkomponenten der zurückgekoppelten Strahlung erfolgt eine Verstärkung. Im eingeschwungenen Zustand ist die erzeugte Strahlung derart schmalbandig, dass eine möglicherweise entstehende dispersive Pulsverlängerung kaum einen Einfluss hat. Damit können je nach Stärke der Dispersion nahe transformlimitierte spektrale Bandbreiten erreicht werden.

## Patentansprüche

1. Verfahren zur Erzeugung von Laserpulsen, wobei das Verfahren die folgenden Schritte umfasst:
- Erzeugen von Laserpulsen mittels eines Pumplasers (1), der die Laserpulse bei einer Pumpwellenlänge (12) mit einer Repetitionsfrequenz emittiert, wobei die Pulsdauer der Laserpulse 0,5-100 ps beträgt,
- Umwandeln der Laserpulse des Pumplasers (1) zumindest zum Teil in Laserpulse bei einer Signalwellenlänge (10) und einer davon verschiedenen Idlerwellenlänge (11) mittels eines optisch parametrischen Oszillators (3), der einen optischen Resonator (20) aufweist, wobei ein Teil der Laserpulse bei der Signalwellenlänge (10) und der Idlerwellenlänge (11) in dem optischen Resonator (20) zurückgekoppelt werden, mit
- einem nichtlinearen Wellenlängenkonverter (22), der die Laserpulse des Pumplasers (1) in die Laserpulse bei der Signalwellenlänge (10) und der Idlerwellenlänge (11) umwandelt,
- einem Auskoppelelement (24), das einen Teil der in dem optischen Resonator (20) zurückgekoppelten Laserpulse bei der Signalwellenlänge (10) und der Idlerwellenlänge (11) aus dem optischen Resonator (20) auskoppelt,
- einer optischen Faser (23) mit einer Dispersion im Bereich von 10-100 ps/nm bei der Signal- (10) oder Idlerwellenlänge (11) und einer Länge von 10-1000 m, wobei die optische Faser (23) eine zeitliche Streckung der Laserpulse bei der Signalwellenlänge (10) oder der Idlerwellenlänge (11) bewirkt, in der Weise, dass die zeitliche Verlängerung der in dem Resonator (20) zurückgekoppelten Laserpulse bei der Signalwellenlänge (10) oder der Idlerwellenlänge (11) 1-500 ps je nm spektraler Bandbreite beträgt,
wobei der zeitliche Abstand der Laserpulse des Pumplasers (1) der Umlaufzeit der Laserpulse bei der Signalwellenlänge (10) oder der Idlerwellenlänge (11) entspricht, so dass durch die Laserpulse des Pumplasers (1) ein schmaler Wellenlängenbereich aus der Strahlung der zeitlich gestreckten Laserpulse bei der Signalwellenlänge (10) bzw. der Idlerwellenlänge (11) selektiert wird, wobei die so erzeugte Strahlung im eingeschwungenen Zustand derart schmalbandig ist, dass eine mögliche dispersive Verlängerung der Laserpulse kaum einen Einfluss hat,
wobei die Signalwellenlänge (10) und die Idlerwellenlänge (11) bei einer festen Länge des optischen Resonators (20) variiert werden durch Variation der Pumpwellenlänge (12) und der Repetitionsfrequenz,
wobei der Pumplaser (1) einen Laserresonator, einen sättigbaren Absorber (4), ein in dem Laserresonator angeordnetes optisch gepumptes Lasermedium (7), eine variable Verzögerungsstrecke (5) zur Einstellung der Repetitionsfrequenz und einen Auskoppler (9) aufweist, wobei in dem Laserresonator außerdem ein wellenlängenselektives Filter (6) angeordnet ist, das eine Filterbandbreite von 50-1000 pm aufweist und in dem Wellenlängenbereich, in dem das Lasermedium (7) die in dem Laserresonator umlaufende Strahlung verstärkt, durchstimmbar ist, wobei der Pumplaser (1) ein Faserlaser ist, und wobei der Auskoppler (9) fasergekoppelt ist und mit einer grundmodigen und polarisationserhaltenden Eingangsfaser (13) und einer ebensolchen Ausgangsfaser (14) verbunden ist und im Bereich des Verstärkungsspektrums des Lasermediums eine Reflektivität von 5-95% besitzt, wobei die Eingangsfaser (13) und die Ausgangsfaser (14) an einen polarisationserhaltenden, fasergekoppelten Strahlteiler (15) angebunden sind, der zwei Eingangs- und zwei Ausgangsanschlüsse besitzt, wobei die zwei Ausgangsanschlüsse über eine Faserschleife (16) miteinander verbunden sind.

2. Verfahren nach Anspruch 1, wobei die Laserpulse des Pumplasers (1) mittels eines dem Pumplaser (1) nachgeordneten optischen Verstärkers (2) verstärkt werden, bevor diese in dem optisch parametrischen Oszillator (3) umgewandelt werden.

3. Verfahren nach Anspruch 2, wobei der optische Verstärker (2) einen Amplitudenmodulator aufweist.

4. Verfahren nach Anspruch 2 oder 3, wobei dem optischen Verstärker (2) ein optischer Isolator nachgeordnet ist.

5. Verfahren nach einem der Ansprüche 1 bis 4, wobei der Pumplaser (1) die Laserpulse mit einer Repetitionsfrequenz zwischen 1 MHz und 20 MHz emittiert, wobei die relative Durchstimmbarkeit der Repetitionsfrequenz bis zu 5 % beträgt.

6. Verfahren nach einem der Ansprüche 1 bis 5, wobei die Pumpwellenlänge (12) im Bereich zwischen 1015 und 1060 nm liegt.

7. Verwendung von durch das Verfahren nach einem der Ansprüche 1 bis 6 erzeugten Laserpulsen bei der Signal- und Idlerwellenlänge (10, 11) für die kohärente Raman-Spektroskopie oder -Mikroskopie.

8. Verwendung nach Anspruch 7, wobei die spektrale Bandbreite der Laserpulse weniger als 10 cm⁻¹ beträgt.

## Claims

1. Method for generating laser pulses, wherein the method comprises the following steps:
generating laser pulses by means of a pump laser(1) that emits the laser pulses at a pump wavelength (12) with a repetition frequency, wherein the pulse duration of the laser pulses is 0.5 to 100 ps,
converting the laser pulses of the pump laser (1) at least in part into laser pulses at a signal wavelength (10) and an idler wavelength (11) different therefrom, by means of an optically parametric oscillator (3) which comprises an optical resonator (20), wherein part of the laser pulses are fed back at the signal wavelength (10) and at the idler wavelength (11) in the optical resonator (20), comprising
- a non-linear wavelength converter (22) which converts the laser pulses of the pump laser (1) into the laser pulses at the signal wavelength (10) and the idler wavelength (11),
- a decoupling element (24) which decouples part of the laser pulses fed back in the optical resonator (20) at the signal wavelength (10) and at the idler wavelength (11) out of the optical resonator (20),
- an optical fiber (23) with a dispersion in the region of 10 to 100 ps/nm at the signal (10) or idler wavelength (11) and a length of 10 to 1000 m, wherein the optical fiber (23) causes a time-related stretch of the laser pulses at the signal wavelength (10) or at the idler wavelength (11) in such a way that the temporal extension of the laser pulses fed back in the resonator (20) is 1 to 500 ps per nm of spectral bandwidth at the signal wavelength (10) or at the idler wavelength (11),
wherein the time distance of the laser pulses of the pump laser (1) is equal to the revolution time period of the laser pulses at the signal wavelength (10) or at the idler wavelength (11), so that a narrow wavelength region is selected from the radiation of the temporally stretched laser pulses at the signal wavelength (10) or at the idler wavelength (11) by means of the laser pulses of the pump laser (1), wherein the generated radiation is narrow-banded in the steady state such that a possible dispersive extension of the laser possibly hardly has an effect,
wherein the signal wavelength (10) and the idler wavelength (11) are varied at a fixed length of the optical resonator (20) by variation of the pump wavelength (12) and the repetition frequency,
wherein the pump laser (1) comprises a laser resonator, a saturable absorber (4), an optically pumped laser medium (7) arranged in the laser resonator, a variable delay path (5) for setting the repetition frequency and a decoupler (9), wherein a wavelength-selective filter (6) is also arranged in the laser resonator, which has a filter bandwidth of 50 to 1000 pm and can be tuned in the wavelength region where the laser medium (7) amplifies the radiation circulating in the laser resonator, wherein the pump laser (1) is a fiber laser, and wherein the decoupler (9) is fiber-coupled and connected to a fundamental-mode and polarization-maintaining input fiber (13) and an output fiber (14) of the same type and has a reflectivity of 5 to 95 % in the region of the amplification spectrum of the laser medium, wherein the input fiber (13) and the output fiber (14) are connected to a polarization-maintaining, fiber-coupled beam splitter (15) that comprises two input connections and two output connections, wherein the two output connections are connected with one another via a fiber loop (16).

2. Method according to claim 1, wherein the laser pulses of the pump laser (1) are amplified by means of an optical amplifier (2) arranged downstream of the pump laser (1) before these pulses are converted in the optical parametric oscillator (3).

3. Method according to claim 2, wherein the optical amplifier (2) comprises an amplitude modulator.

4. Method according to claim 2 or 3, wherein an optical isolator is arranged downstream of the optical amplifier (2).

5. Method according to one of claims 1 to 4, wherein the pump laser (1) emits the laser pulses with a repetition frequency between 1 MHz and 20 MHz, the relative tunability of the repetition frequency being up to 5%.

6. Method according to one of 1 to 5, wherein the pump wavelength (12) lies in the range between 1015 and 1060 nm.

7. Use of laser pulses generated by the method according to any one of claims 1 to 6 at the signal and idler wavelength (10, 11) for coherent Raman spectroscopy or microscopy.

8. Use according to claim 7, wherein the spectral bandwidth of the laser pulses is less than 10 cm⁻¹.

## Revendications

1. Procédé de génération d'impulsions laser, dans lequel le procédé comprend les étapes suivantes :
de génération d'impulsions laser au moyen d'un laser à pompe (1), qui émet les impulsions laser à une longueur d'onde de pompage (12) avec une fréquence de répétition, dans lequel la durée des impulsions laser est de 0,5 à 100 ps,
de conversion des impulsions laser du laser à pompe (1) au moins en partie en des impulsions laser pour une longueur d'onde de signal (10) et une longueur d'onde auxiliaire (11) différente de celle-ci au moyen d'un oscillateur à paramètres optiques (3), qui présente un résonateur optique (20), dans lequel une partie des impulsions laser sont retournées dans le résonateur optique (20) à la longueur d'onde de signal (10) et à la longueur d'onde auxiliaire (11), avec
- un convertisseur de longueur d'onde non linéaire (22), qui convertit les impulsions laser du laser à pompe (1) en les impulsions laser à la longueur d'onde de signal (10) et à la longueur d'onde auxiliaire (11),
- un élément de découplage (24), qui découple une partie des impulsions laser retournées dans le résonateur optique (20) pour la longueur d'onde de signal (10) et la longueur d'onde auxiliaire (11) en dehors du résonateur optique (20),
- une fibre optique (23) avec une dispersion dans la plage de 10 - 100 ps/nm pour la longueur d'onde de signal (10) ou la longueur d'onde auxiliaire (11) et avec une longueur de 10 - 1000 m, dans lequel la fibre optique (23) entraîne un étirement dans le temps des impulsions laser pour la longueur d'onde de signal (10) ou la longueur d'onde auxiliaire (11), de telle manière que le prolongement dans le temps des impulsions laser retournées dans le résonateur (20) est de 1 - 500 ps par nm de largeur de bande spectrale pour la longueur d'onde de signal (10) ou la longueur d'onde auxiliaire (11),
dans lequel l'écart en termes de temps entre les impulsions laser du laser à pompe (1) correspond au temps de circulation des impulsions laser pour la longueur d'onde de signal (10) ou la longueur d'onde auxiliaire (11) de sorte qu'une plage de longueur d'onde étroite est sélectionnée parmi le rayonnement des impulsions laser étirées dans le temps pour la longueur d'onde de signal (10) ou la longueur d'onde auxiliaire (11) par les impulsions laser du laser à pompe (1), dans lequel le rayonnement ainsi généré est sous le régime établi de telle manière en bande étroite qu'un prolongement dispersif éventuel des impulsions laser n'a guère d'incidence,
dans lequel la longueur d'onde de signal (10) et la longueur d'onde auxiliaire (11) varient pour une longueur fixe du résonateur optique (20) par la variation de la longueur d'onde de pompage (12) et de la fréquence de répétition,
dans lequel le laser à pompe (1) présente un résonateur à laser, un absorbeur saturable (4), un milieu laser (7) pompé de manière optique, disposé dans le résonateur laser, un trajet de retardement variable (5) pour régler la fréquence de répétition, et un dispositif de découplage (9), dans lequel par ailleurs un filtre à sélection de longueurs d'ondes (6) est disposé dans le résonateur laser, lequel présente une largeur de bande de filtre de 50 - 1000 pm et qui peut être ajusté dans la plage de longueur d'onde, dans laquelle le milieu laser (7) amplifie le rayonnement circulant dans le résonateur laser, dans lequel le laser à pompe (1) est un laser à fibres, et dans lequel le dispositif de découplage (9) est couplé par des fibres et est relié à une fibre d'entrée (13) à mode de base et à polarisation maintenue et à une fibre de sortie (14) identique et possède une réflectivité de 5 - 95 % dans la plage du spectre d'amplification du milieu laser, dans lequel la fibre d'entrée (13) et la fibre de sortie (14) sont attachées à un séparateur de rayonnement (15) à polarisation maintenue, à couplage par fibre, qui possède deux raccords d'entrée et deux raccords de sortie, dans lequel les deux raccords de sortie sont reliés entre eux par l'intermédiaire d'une boucle de fibre (16).

2. Procédé selon la revendication 1, dans lequel les impulsions laser du laser à pompe (1) sont amplifiées au moyen d'un amplificateur optique (2) disposé en aval du laser à pompe (1) avant que celles-ci ne soient converties dans l'oscillateur à paramètres optiques (3).

3. Procédé selon la revendication 2, dans lequel l'amplificateur optique (2) présente un modulateur d'amplitudes.

4. Procédé selon la revendication 2 ou 3, ans lequel un isolateur optique est disposé en aval de l'amplificateur optique (2).

5. Procédé selon l'une quelconque des revendications 1 à 4, dans lequel le laser à pompe (1) émet les impulsions laser avec une fréquence de répétition entre 1 MHz et 20 MHz, dans lequel la possibilité d'ajustement relatif de la fréquence de répétition va jusqu'à 5 %.

6. Procédé selon l'une quelconque des revendications 1 à 5, dans lequel la longueur d'onde de pompage (12) se situe dans la plage entre 1015 et 1060 nm.

7. Utilisation d'impulsions laser générées par le procédé selon l'une quelconque des revendications 1 à 6 pour la longueur d'onde de signal et la longueur d'onde auxiliaire (10, 11) pour la spectroscopie ou microscopie Raman cohérente.

8. Utilisation selon la revendication 7, dans laquelle la largeur de bande spectrale des impulsions laser est inférieure à 10 cm⁻¹.
